# EUROPÄISCHE PATENTANMELDUNG

(11) **EP 2 178 191 A2**
(43) Veröffentlichungstag der Anmeldung: **21.04.2010**
(21) Anmeldenummer: 09013059.2
(22) Anmeldetag: 15.10.2009
(51) Int. Cl.: H02K 7/18

(54) **Freikolbenaggregat**

(30) Priorität: 15.10.2008 DE 102008045136
(71) Anmelder: Bucher, Jürgen, 73457 Essingen (DE)
(72) Erfinder: Bucher, Jürgen, 73457 Essingen (DE)
(74) Vertreter: Dosterschill, Peter

(57) **Zusammenfassung**

Die Erfindung betrifft ein Freikolbenaggregat, bestehend aus einem auf einer gemeinsamen, linear wirkenden Kolbenstange angeordneten Kolbensatz mit zwei jeweils an einem Ende der Kolbenstange befestigen Arbeitskolben und einem dazwischen angeordneten Mittelkolben. Diesen ist je ein Zylinder zugeordnet, wobei die Zylinder der beiden Arbeitskolben je einen Brennraum und je wenigstens eine Glüh- oder Zündkerze und eine Auslassöffnung aufweisen. Im beidseitig wirkenden Zylinder des Mittelkolbens ist eine gemeinsame Einlassöffnung für Frischgas und je ein Überströmkanal 10 für das durch die Kolbenbewegung verdichtete Frischgas zu je einem der alternierend beaufschlagten Brennräume vorgesehen. Der Mittelkolben 9 als Ankerkolben besteht wenigstens zum Teil aus einem Permanentmagnet oder einem Magnetkreis schließenden Material und der dem Ankerkolben zugeordnete Zylinder besteht aus abwechselnd magnetisch leitendem und magnetisch nichtleitendem Material. Bedingt durch die lineare und wechselnde Relativbewegung des Ankerkolbens 9 gegenüber dem zugeordneten Zylinder, wird ein den Ankerkolben 9 umgebendes magnetisches Feld in ein eine Wicklung tragendes Blechpaket 11 induziert und eine Wechselspannung wird mittels auf dem Blechpaket 11 zusätzlich vorgesehener Sekundärwicklungen nach dem Trafoprinzip generiert.

Das Freikolbenaggregat lässt sich in einfacher .Weise starten und zeichnet sich unter anderem durch einen geringen Treibstoffverbrauch aus.

## Beschreibung

Die Erfindung betrifft ein Freikolbenaggregat nach den Merkmalen des Oberbegriffs des Anspruchs 1, welches insbesondere zur Stromerzeugung dient.

Aus AT 396 617 B ist eine Zweitakt-Brennkraftmaschine bekannt. Diese weist zu einem Mittelkolben weisende Brennräume auf, die zu erheblichen Lagerungsproblemen für Benutzer führen, wenn erzeugte magnetische Felder eine erhebliche Seitenkraft bewirken.
Bekannte Zweitakt-Brennkraftmaschinen haben das Problem, dass dem Kraftstoff ein Schmierstoff zugefügt werden muss. Dieser ist kostenaufwändig und erschwert die Abgasreinigung. Gegebenenfalls werden sehr hochwertige Werkstoffe im Bereich Kolben-Zylinder verwendet, um dieses Problem zu reduzieren.

Der besondere Aspekt einer an sich bekannten Freikolbenmaschine liegt in der Kombination einer Wärmekraftmaschine mit einer Arbeitsmaschine mit der Maßgabe einer direkten, triebwerklosen Übertragung einer zyklischen Kolbenbewegung auf den Arbeitsteil. Dadurch entfallen jegliche mechanische Triebwerke, wie z. B. ein Kurbelantrieb. Die Leistungsabgabe erfolgt nichtmechanisch. Eine der möglichen Anwendungsformen ist die Kombination eines Freikolbenmotors mit einem elektrischen Lineargenerator. Freikolbenmotore haben häufig Probleme beim Starten, da der Kolbensatz "Frei" ist. Auch die elektrische Startmethode durch Bestromung einer angebauten Wicklung hat aufgrund eines nicht vermeidbaren Luftspaltes bei sehr langem Hub eine Mehrzahl von Schwierigkeiten. Bei Freikolbenmaschinen mit angebauter Wicklung reduzieren externe Hilfsaggregate für die Startfunktion sowie die Kraftstoff- und Luftzuführung bzw. die Drucklufterzeugung den Gesamtwirkungsgrad.

Der vorliegenden Erfindung liegt nun die Aufgabe zu Grunde, ein Freikolbenaggregat derart weiterzubilden, dass sich in Kombination mit einem Lineargenerator eine möglichst störungs- und wartungsfreie Geräteeinheit ergibt.

Die Lösung dieser Aufgabe erfolgt durch ein Freikolbenaggregat mit den Merkmalen des Patentanspruchs 1.
Vorteilhafte Weiterbildungen der Erfindung ergeben sich durch die Merkmale der abhängigen Ansprüche

Der besondere Vorteil dieser Anordnung besteht darin, dass der mittlere Kolben, der als Ankerkolben des Lineargenerators dient, gleichzeitig das Ansaugen und Vorverdichten der Frischgas für die beiden Brennräume übernimmt.

Durch die Anordnung der jeweils außen liegenden Brennräume in den beiden Arbeitskolben zugeordneten Zylindern und deren Abdichtung gegenüber dem Zylinder des Mittel- bzw. Ankerkolbens gelangt kein wie auch immer entstehender Gaswechsel aus den Zylindern der beiden Antriebskolben in den vornehmlich der Ansaugung und Vorverdichtung der Frischgasdienenden mittleren Zylinder.
Auf Grund der exakten, guten Führung der in den Zylindern zyklisch bewegten Kolben kann auf üblicherweise notwendige Lagerungsmaßnahmen verzichtet werden.

Das erfindungsgemäße Freikolbenaggregat zeichnet sich auch durch gleichzeitiges Einblasen von Druckluft in beide Brennräume aus, wodurch die Startwilligkeit erheblich verbessert wird.

Für die Anwendung kommt insbesondere ein tragbares Freikolbenaggregat im Leistungsbereich 1 bis 150KW in Betracht. Ein solches Freikolbenaggregat kann auch in ein kofferförmiges Modul integriert werden und mittels Sammelschiene im Verbund mit mehreren gleichen Typs arbeiten. Es kann aber auch alleine arbeiten und im Wesentlichen elektrische Energie liefern und dabei eine Vielzahl flüssiger und gasförmiger Brennstoffe verarbeiten.

Im Folgenden wird ein Ausführungsbeispiel an Hand der Zeichnungen beschrieben:
Es zeigt
Figur 1 einen ersten Teilausschnitt des erfindungsgemäßen Freikolbenaggregats,

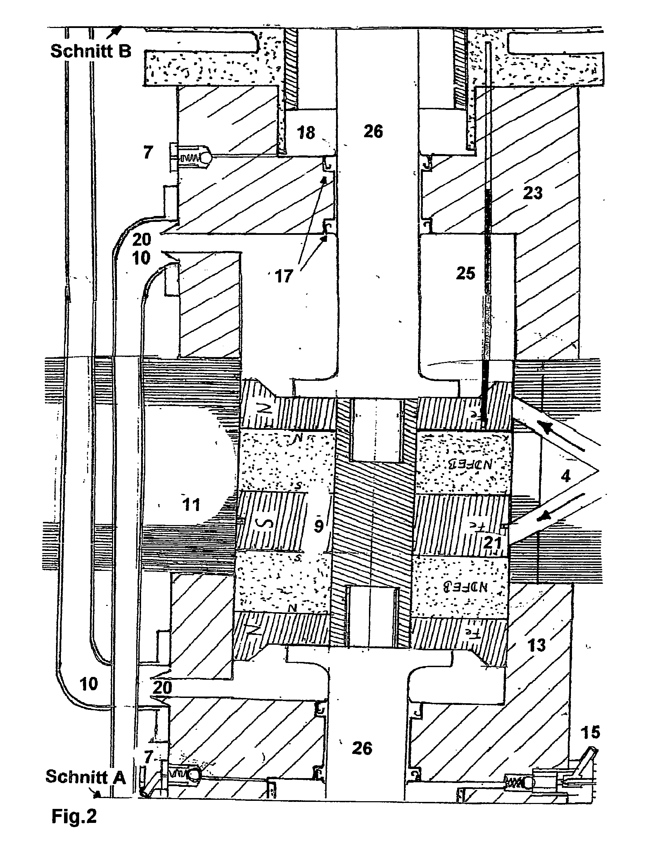

Figur 2 einen zweiten Teilausschnitt des erfindungsgemäßen Freikolbenaggregats,
Figur 3 einen dritten Teilausschnitt des erfindungsgemäßen Freikolbenaggregats, und

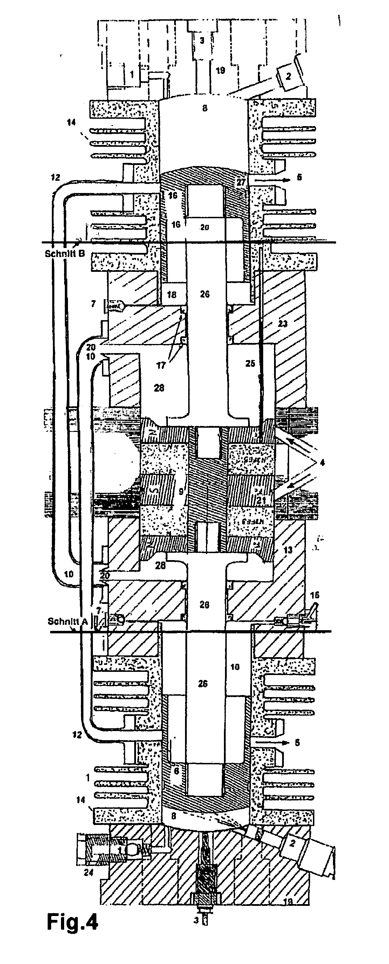

Figur 4 einen Schnitt durch das erfindungsgemäße Freikolbenaggregat.

Das in den Figuren dargestellte Freikolbenaggregat besteht aus einem innerhalb eines gemeinsamen Gehäuses auf einer linear bewegbaren Kolbenstange 26 angeordneten Kolbensatz mit zwei Arbeitskolben 6,16 und einem dazwischen angeordneten Mittelkolben, dem die Funktion des Ankerkolbens 9 innerhalb eines Lineargenerators zukommt. Den beiden Arbeitskolben 6,16 sind Zylinder zugeordnet, die in den jeweils nach außen gerichteten Bereichen je einen Brennraum 8 aufweisen. Jedem Brennraum 8 ist je eine Einspritzdüse 2 und je eine Glüh- bzw. Zündkerze 3 zugeordnet.

Bei dieser Anordnung erfolgt der Betriebsstart ähnlich wie bei einem normalen Dieselmotor mit dem Einschalten der beiden Glüh- bzw. Zündkerzen 3. Zeitgleich wird über je ein Ventil 1 Druckluft in beide Brennräume 8 eingeblasen, bis in diesen Brennräumen jeweils ein Druck von etwa 12 bis 30 Bar, je nach verwendetem Brennstoff, erreicht wird. Durch den Luftdruck bewegt sich nun der gesamte Kolbensatz mit den beiden Antriebskolben 6,16 und dem Mittelkolben 9 in eine Mittelstellung, in der die von den Zylindern 14 der beiden Arbeitskanäle abgehenden Auspuffkanäle 5 geschlossen sind und in beiden Brennräumen 8 der gleiche Druck herrscht. Nach dem Druckausgleich wird an beiden Einspritzdüsen 2 fast gleichzeitig Kraftstoff eingespritzt wird.

Durch die nicht ganz symmetrische Kolbenstellung und die leicht zeitversetzte Einspritzung zündet nun einer der beiden Brennräume etwas früher und es kommt zu den ersten beiden Explosionen. Zwischenzeitlich wurde über einen am Zylinder des Ankerkolbens 9 vorgesehenen Anschluss für einen Vergaser 4 oder für eine Drosselklappe frisches KraftstoffLuftgemisch oder Frischluft durch den Ankerkolben 9 angesaugt. Dieses Luftgemisch oder die Frischluft wird anschließend vorverdichtet und über vom zugeordneten Zylinder abgehende Überströmkanäle 10 in die Brennräume 8 gedrängt, wo es nach dem bekannten Zweitaktprinzip im Wechsel Arbeit leistet.

Alternativ zum Vergaserbetrieb kommt auch eine elektronisch gesteuerte Einspritzanlage in Betracht, die ähnlich dem Common-Rail-System arbeitet. Der nötige Kraftstoffdruck wird dabei über eine elektrische Pumpe erzeugt oder alternativ über einen schlanken Hilfskolben 25, der direkt am Ankerkolben angebracht ist und in einen Zylinderschuh 13,23 gedrückt wird. Durch den Hilfskolben kann der Kolbensatz 6,9,16 gleichzeitig am Verdrehen gehindert werden. In jedem Zylinderschuh befinden sich zwei Dichtringe 17, die verhindern, dass Brennstoff-Luftgemisch oder Frischluft zum jeweiligen Arbeitskolben kommt und Schmierstoffnebel aus dem dem Brennraum 8 abgewandten unteren Kolbenbereich 18 zum Brennstoff-Luftgemisch bzw. zur Ansaugluft im Bereich des Mittelkolbens dringen kann. Der untere Kolbenraum 18 kann auch sehr effektiv als Luft- oder Vakuumpumpe verwendet werden, wenn ein steuerbares Zuluftventil im Zylinderschuh 13,23 integriert wird und ein Ölabscheider dem Entlüftungsventil 7 nachgeschaltet wird. In der Standard-Ausführung erreicht der untere Kolbenraum 18 über das Entlüftungsventil 7 bereits nach wenigen Arbeitstakten ein Fast-Vakuum mit einem steuerbaren Schmierstoffdurchsatz aus z.B. einem abschaltbaren Öldossierventil.

Bei den beiden Überströmkanälen 10, die als Lavaldüse ausgebildet sein können, werden an der Position 12, bei Vergaserbetrieb, Sicherheitsventile angeordnet, die bei eventuellen Fehlzündungen den Brenngasdruck an definierter Stelle entlasten, um Schäden zu vermeiden. Alternativ kann auch ein kleiner Pufferspeicher für den Einspritzbetrieb angebracht werden.

Auf eine Lagerung der Kolbenstange 26 kann verzichtet werden, da die beiden Arbeitskolben 6,16 in den zugehörigen Zylindern 14 die Führung ausreichend übernehmen.

Der Ankerkolben 9 besteht wenigstens zum Teil aus einem Permanentmagnet oder einem einen Magnetkreis schließenden Material, während der dem Ankerkolben 9 zugeordnete Zylinder aus abwechselnd magnetisch leitendem und magnetisch nicht leitendem Material gebildet ist. Durch die lineare und wechselnde Relativbewegung des Ankerkolbens 9 gegenüber dem zugeordneten Zylinder wird ein magnetisches Wechselfeld in ein eine Wicklung tragendes Blechpaket 11 oder in einen entsprechenden Ferritkern induziert, welches den Ankerkolben umgibt. Auf diesem Blechpaket 11 sind wiederum Sekundärwicklungen in trafoähnlicher Anordnung angebracht, in denen eine Wechselspannung nach dem Trafoprinzip generierbar ist.

Zusammenfassend ist festzustellen, dass das erfindungsgemäße Freikolbenaggregat aus einem auf einer gemeinsamen, linear wirkenden Kolbenstange angeordneten Kolbensatz mit zwei jeweils an einem Ende (das heißt an gegenüberliegenden Enden) der Kolbenstange befestigen Arbeitskolben 6,16 und einem dazwischen angeordneten Mittelkolben 9 besteht, wobei dem Mittelkolben ein beidseitig wirkender Zylinder zugeordnet ist. Die Zylinder der beiden Arbeitskolben 6, 16 weisen je einen Brennraum und je wenigstens eine Glüh- oder Zündkerze 3 und eine Auslassöffnung auf. Im beidseitig wirkenden Zylinder des Mittelkolbens 9 ist je eine Einlassöffnung für Frischgas (z.B. Verbrennungsluft) und je ein Überströmkanal 10 für die durch die Kolbenbewegung vorverdichtete Frischgas (z.B. Verbrennungsluft) zu je einem der alternierend beaufschlagten Brennräume vorgesehen.

Der Mittelkolben 9 als Ankerkolben besteht wenigstens zum Teil aus einem Permanentmagnet oder einem Magnetkreis schließenden Material; der dem Ankerkolben 9 zugeordnete Zylinder besteht aus abwechselnd magnetisch leitendem und magnetisch nicht leitendem Material.

In dieser Anordnung induziert, bedingt durch eine lineare und wechselnde Relativbewegung des Ankerkolbens 9 gegenüber dem zugeordneten Zylinder, ein den Ankerkolben 9 umgebendes magnetisches Feld im Blechpaket 11, das eine Wicklung trägt. Die Induktion kann auch in einen entsprechenden Ferritkern induziert werden. Daraus wird mittels auf dem Blechpaket 11 zusätzlich vorgesehener Sekundärwicklungen nach dem Trafoprinzip eine Wechselspannung generiert.

Der Ankerkolben 9 weist einen im Vergleich zu den beiden Arbeitskolben 6,16 größeren Querschnitt auf, der infolge einer erhöhten Volumenverdrängung der Frischgas über den jeweiligen Überströmkanal 10 eine erheblich höhere Aufladung im jeweiligen Brennraum 8 bewirkt.

Insbesondere ist der Querschnitt des Ankerkolbens 9 etwa um den Faktor 1,5 bis 5 größer als der Querschnitt der beiden Arbeitskolben 6,16. Der Querschnitt des Ankerkolbens 9 beträgt zum Beispiel 200 mm², während der Querschnitt der beiden Arbeitskolben 6, 16 zum Beispiel 100mm² beträgt.

Bei einer Anordnung mit jeweils im äußeren Zylinderbereich der Arbeitskolben 6,16 vorgesehenen Brennräumen 8 ist der jeweils innere Zylinderbereich 18 gegenüber dem Zylinder des Mittelkolbens durch Dichtungsringe 17 abgedichtet. Dadurch wird zum Bespiel ein geschlossener Schmierkreis ähnlich einer Trockensumpfschmierung ermöglicht.

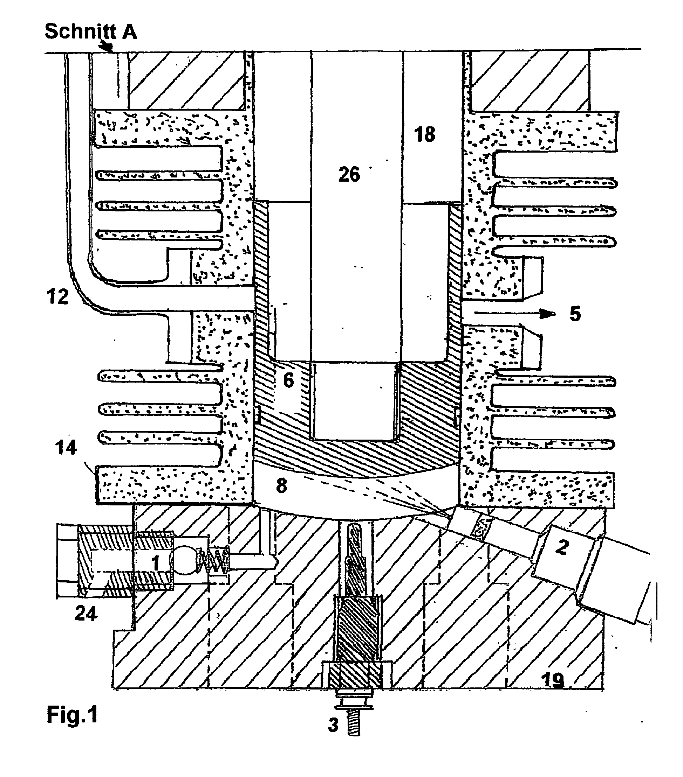

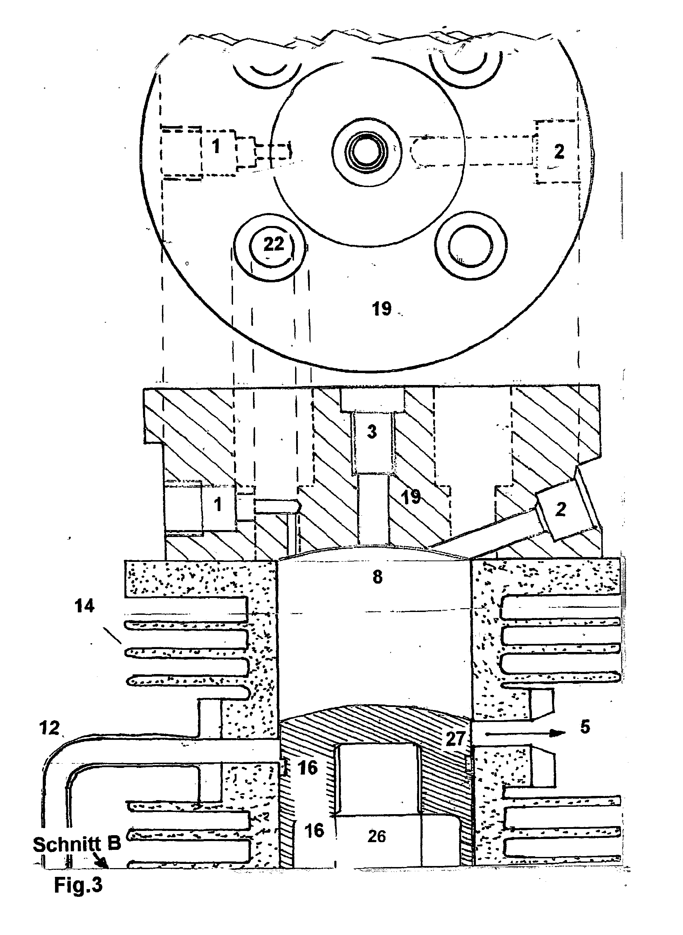

Die Überströmkanäle 10 sind als Lavaldüse ausgebildet oder weisen an Position 12 (Figuren 1, 3) eine Wirbelkammer, einen Pufferspeicher oder ein Sicherheitsventil auf.

Am Mittelkolben kann ein Hilfskolben 25 angebracht sein, der einerseits ein Verdrehen des Kolbensatzes verhindert und andererseits als eine Hydraulikpumpe zur Kraftstoff- oder Schmierstoffbeförderung dient.

Mehrere Freikolbenaggregate mit einheitlichen Anschlüssen sind zu einer Batterie von Stromerzeuger-Modulen zusammensetzbar. Damit wird sowohl ein Modulwechsel im laufenden Betrieb als auch eine Leistungsvervielfachung ermöglicht.

Das erfindungsgemäße Freikolbenaggregat zeichnet sich durch eine Mehrzahl von Vorteilen aus.

So ist der unter den außen liegenden Arbeitskolben angeordnete Hohlraum nicht - wie bei 2-Taktmotoren üblich - zur Vorverdichtung zu verwenden, sondern steht für andere Zwecke zur Verfügung. Dadurch ist es nun möglich, Schmierstoffe aus einem geschlossenen Schmierkreis - ähnlich einer Trockensumpfschmierung - einzubringen; es lassen sich Brennstoffe ohne Schmierstoffbeimischung verwenden wie zum Beispiel Gas oder Alkohol. Der Hohlraum kann aber auch zum Ansaugen (Vakuumpumpen) oder Verdichten von Druckluft verwendet werden.

Eine Lagerung des Kolbensatzes ist nicht erforderlich, weil die Führungseigenschaften der Kolben für eine präzise Führung ausreichen.

Auch Überstromkanäle sind nicht zwingend erforderlich, vielmehr kann ein Teil der nebenbei erzeugten Pressluft über einen Druckminderer und eine Drossel oder Stelldrossel den Brennräumen zugeführt werden.

Die Erfindung betrifft auch ein Verfahren zum Betrieb eines vorstehend beschriebenen Freikolbenaggregats. Dabei wird ein Startvorgang durch gleichzeitig in beide Brennräume einströmende Frischgasbis zu einem je nach verwendetem Brennstoff erforderlichen Betriebsdruck und durch eine zeitversetzte Einspritzung von Brennstoff in die beiden Brennräume ausgelöst.

Zum Starten erreicht der Kolbensatz mit dem beidseitigen Einblasen von Druckluft eine auspuffschließende Mittelstellung. Durch das leicht zeitversetzte Einspritzen von Kraftstoff wird das Aggregat aus dem mechanischen Stillstand gestartet. Durch dieses Startverfahren wird es möglich, jeden Arbeitstakt gezielt zu steuern. Es sind sowohl einzelne Arbeitstakte, gebündelte Arbeitstakte und auch konstante Frequenzvorgaben bis zum Beispiel 300 Hz möglich.

Das erfindungsgemäße Freikobenkolbenaggregat kann mit einer elektronisch gesteuerten Einspritzanlage betrieben werden. Angebaute Turbolader sind nicht erforderlich.

Neben dem einfachen und schnellen Startverfahren zeichnet sich das erfindungsgemäße Freikolbenaggregat durch ein sehr günstiges Leistungs-Gewichtsverhältnis, geringe Emissionen und einen geringen Treibstoffverbrauch aus. Es hat ein sehr breites Anwendungsgebiet und kann zum Beispiel bei Luft-, Land- und Wasserfahrzeugen mit elektromotorischen Antrieb ebenso wie als stationäres Blockheizkraftwerk BHWK verwendet werden.

### Bezugszeichenliste

- 1: Ventil für Druckluft
- 2: Einspritzdüse
- 3: Glühkerzen
- 4: Vergaseranschluss oder Drosselklappe (je nach Ausführung)
- 5: Auspuffkanäle
- 6: Arbeits-Kolben links
- 7: Entlüftungsventil (alternativ als Druckluft-Rückschlagventil)
- 8: Brennräume
- 9: Ankerkolben (Rotor) aus Permanentmagneten und magnetisch leitfähigem Material zur Feldumlenkung und einer Verbindungsmuffe
- 10: Überströmkanäle
- 11: Trafo-Blechpaket mit mehreren Sekundärwicklungen
- 12: Position für Sicherheitsventile zur Entlastung bei Fehlzündung und Position für Wirbelkammer bzw. des Pufferspeichers zur Verbrennungsoptimierung
- 13: Zylinderschuh links
- 14: Zylinder
- 15: Steuerbares Zuluftventil
- 16: Arbeits-Kolben rechts
- 17: Wellendichtringe (Kolbenstangendichtungen)
- 18: Unterer Kolbenraum für Schmierstoffnebel aus dem geschlossenen Schmierkreis (ähnlich Trockensumpfschmierung) und zum Erzeugen von Druckluft bzw. Vakuum

## Patentansprüche

1. Freikolbenaggregat, bestehend aus einem auf einer gemeinsamen, linear wirkenden Kolbenstange angeordneten Kolbensatz mit zwei jeweils an einem Ende der Kolbenstange befestigen Arbeitskolben (6,16) und einem dazwischen angeordneten Mittelkolben (9), denen je ein Zylinder zugeordnet ist, wobei die Zylinder der beiden Arbeitskolben (6, 16) je einen Brennraum und je wenigstens eine Glüh- oder Zündkerze (3) und eine Auslassöffnung aufweisen und im beidseitig wirkenden Zylinder des Mittelkolbens (9) je eine Einlassöffnung für Frischgas und je ein Überströmkanal (10) für das durch die Kolbenbewegung vorverdichtete Frischgas zu je einem der alternierend beaufschlagten Brennräume vorgesehen ist,
**dadurch gekennzeichnet,**
**dass** der Mittelkolben (9) als Ankerkolben wenigstens zum Teil aus einem Permanentmagnet oder einem Magnetkreis schließenden Material besteht,
**dass** der dem Ankerkolben (9) zugeordnete Zylinder aus abwechselnd magnetisch leitendem und magnetisch nicht leitendem Material besteht, und
**dass** in dieser Anordnung, bedingt durch eine lineare und wechselnde Relativbewegung des Ankerkolbens (9) gegenüber dem zugeordneten Zylinder, ein den Ankerkolben (9) umgebendes magnetisches Feld in ein eine Wicklung tragendes Blechpaket (11) oder in einen entsprechenden Ferritkern induzierbar ist und mittels auf dem Blechpaket (11) zusätzlich vorgesehener Sekundärwicklungen eine jeweilige Wechselspannung nach dem Trafoprinzip generierbar ist

2. Freikolbenaggregat nach Anspruch 1, **dadurch gekennzeichnet, dass** der Ankerkolben (9) einen im Vergleich zu den beiden Arbeitskolben (6,16) größeren Querschnitt aufweist, der infolge einer erhöhten Volumenverdrängung des Frischgases über jeweiligen Überströmkanal (10) eine höhere Aufladung im jeweiligen Brennraum bewirkt.

3. Freikolbenaggregat nach Anspruch 2, **dadurch gekennzeichnet, dass** der Querschnitt des Ankerkolbens (9) etwa um den Faktor 1,5 bis 5 größer ist als der Querschnitt der beiden Arbeitskolben (6,16).

4. Freikolbenaggregat nach einem der vorstehenden Ansprüche, **dadurch gekennzeichnet, dass** bei einer Anordnung mit jeweils im äußeren Zylinderbereich der Arbeitskolben (6,16) vorgesehenen Brennräumen der jeweils innere Zylinderbereich (18) gegenüber dem Zylinder des Mittelkolbens durch Dichtungsringe (17) abgedichtet ist.

5. Freikolbenaggregat nach einem der vorhergehenden Ansprüche, **dadurch gekennzeichnet, dass** die Überströmkanäle als Lavaldüse ausgebildet sind oder eine Wirbelkammer, einen Pufferspeicher oder ein Sicherheitsventil aufweisen.

6. Freikolbenaggregat nach einem der vorhergehenden Ansprüche, **dadurch gekennzeichnet, dass** am Mittelkolben ein Hilfskolben (25) angebracht ist, der einerseits ein Verdrehen des Kolbensatzes verhindert und andererseits eine Hydraulikpumpe zur Kraftstoff- oder Schmierstoffbeförderung bildet.

7. Freikolbenaggregat nach einem der vorhergehenden Ansprüche, **dadurch gekennzeichnet, dass** mehrere Freikolbenaggregate mit einheitlichen Anschlüssen zu einer Batterie von Stromerzeuger-Modulen zusammensetzbar sind.

8. Verfahren zum Betrieb eines Freikolbenaggregats nach einem der vorhergehenden Ansprüche, **dadurch gekennzeichnet, dass** ein Startvorgang durch gleichzeitig in beide Brennräume einströmendes Frischgas bis zu einem je nach verwendetem Brennstoff erforderlichen Betriebsdruck und durch eine zeitversetzte Einspritzung von Brennstoff in die beiden Brennräume auslösbar ist.
